# EUROPEAN PATENT APPLICATION

(11) **EP 4 671 108 A1**
(43) Date of publication of application: **31.12.2025**
(21) Application number: 25185133.3
(22) Date of filing: 25.06.2025
(51) Int. Cl.: B62M 15/00

(54) **DRIVETRAIN FOR A BICYCLE**

(30) Priority: 26.06.2024 IT 202400014656
(71) Applicant: Fanaletti, Franco, 29015 Castel San Giovanni (PC) (IT)
(72) Inventor: Fanaletti, Franco, 29015 Castel San Giovanni (PC) (IT)
(74) Representative: Fisauli, Beatrice A. M.

(57) **Abstract**

The present invention relates to a drivetrain (10) for vehicles comprising at least one drive wheel, the vehicle including at least one support (20, 30) rotating integrally with a central axle (11) and with the pedal cranks (15, 16), and a toggle mechanism (40, 50) connecting the support (20, 30) to the wheel (130), wherein the toggle mechanism (40, 50) is connected to a slide (45, 55) that is slidable with respect to the frame (110), and wherein a rotary movement imparted to the pedal cranks (15, 16) is transformed into a reciprocating rectilinear motion of the slide (45, 55), the drivetrain further comprising a gear (48, 58, 49, 59) that connects the slide (45, 55) to the wheel (130) of the vehicle to transform the reciprocating rectilinear motion of said slide into a rotary motion of the gear to provide, in an active phase, a torque to the wheel (130).

## Description

The present invention relates to a drivetrain for vehicles comprising at least one drive wheel, such as one for a bicycle. More specifically, the invention concerns a drivetrain used to transmit the driving power from a bicycle user to a wheel of the bicycle.

In this technical field, the most commonly used and well-known drivetrain includes a pair of pedal cranks that rotate about a central axis fixed to the frame. These cranks, via a chainring-chain-sprocket assembly, transmit power to the wheel of the bicycle, typically the rear wheel. Optionally, the drivetrain may be configured to vary the transmission ratio, i.e., the number of revolutions of the wheel per revolution of the pedal cranks.

A common feature of all drivetrain systems of this type, whether or not equipped with transmission ratio changing devices, is the transmission of a substantially constant torque throughout the entire rotation cycle of the pedal cranks.

However, as is well known, the thrust and therefore the power generated by a cyclist in the saddle is not constant over the rotation of the crank. In particular, most of the power is generated when the pedal crank is in a position between "12 o'clock" and "5 o'clock", i.e., in the so-called "power phase." In this phase, the extension of the hip and knee generates the strongest downward thrust on the pedal, thus producing the highest torque. This action begins with the engagement of the gluteus maximus and quadriceps muscles, followed by the hamstrings and calves, especially around the "3 o'clock" position.

Between "6 o'clock" and "12 o'clock", the knee undergoes slight flexion to help bring the pedal back up. In this return phase, where the generated torque is essentially zero, the crank rotation is sustained by the thrust, in the power phase, applied by the opposite leg on the pedal of the opposite crank.

To fix this thrust inconsistency, drivetrain systems with oval chainrings instead of circular ones have been developed over the years. Such geometry allows for a more gradual transition through the dead zones of the pedaling cycle and a slight increase in the overall power output delivered by the cyclist.

However, these oval chainring systems offer only modest power gains and are not without significant technical drawbacks.

A first drawback lies in the difficulty of coupling oval chainrings with a derailleur for gear shifting.

A further drawback concerns the reduced engagement and retention of the chain with the chainring teeth in certain rotation sectors, which has led to the design and adoption of specially shaped tooth profiles to mitigate this issue.

In this context, the object of the present invention is to propose an alternative drivetrain for a vehicle comprising at least one drive wheel, typically a bicycle, capable of overcoming the above drawbacks of the prior art.

In particular, the object of the present invention is to provide a drivetrain capable of transmitting a variable torque to the wheel throughout the rotation of the pedal cranks.

More specifically, the object of the invention is to offer a drivetrain that better adapts to the morphology of the leg joints and muscles involved in the pedaling motion.

A further object of the present invention is to provide a drivetrain that is particularly robust and requires minimal maintenance.

These and other objects are achieved by a drivetrain for a vehicle comprising at least one drive wheel, typically a bicycle, according to claim 1.

In detail, according to the present invention, the drivetrain comprises:
- a central axle rotatably mountable on the frame of the vehicle;
- at least one support, rotating integrally with said central axle;
- a pair of pedal cranks, connected to said central axle or to said support or to both, and rotating integrally therewith.

The support comprises a circular guide, the geometric centre of which is arranged eccentric with respect to the rotation axis of the central axle.

More precisely, said circular guide is configured to house and retain, inside it, an element movable in a guided manner along a circular path.

The drivetrain further comprises a toggle mechanism connecting the support to the wheel of the vehicle.

More specifically, the toggle mechanism comprises:
- a first rod having a first end and a second end, said first end being hinged to the frame of the vehicle;
- a second rod having a first end and a second end, said first end being connected to a slide that moves with respect to the frame of the vehicle;
- a hinge connecting the second ends of the first rod and the second rod;
- a pivot housed within the circular guide of the support, said pivot being connected to the hinge that links the first and second rods.

According to one aspect of the invention, the support comprises a discoidal body in which a groove with circular profile is obtained, the walls of which serve as a guide for said pivot.

Preferably, the pivot is equipped with rolling means adapted to cooperate with the guide walls.

The rotary movement imparted by the pedal cranks to the support is converted thanks to the cooperation between the circular guide and the pivot into a reciprocating rectilinear motion of the first end of the second rod.

Said second rod then transfers the reciprocating rectilinear motion to the slide.

According to the present invention, the drivetrain also comprises a gear connecting the slide to the vehicle's wheel.

More precisely, in a preferred embodiment, said gear comprises a rack integral with the slide and a gear wheel meshing with said rack. The gear wheel, in turn, is connectable to the wheel pivot via a freewheel.

Thus, the reciprocating rectilinear motion of the rack is transformed into an alternating rotary motion of the gear wheel. In the forward direction (also known as the thrust phase), the freewheel can transmit torque to the wheel, while in the opposite direction (also known as the return phase), the freewheel decouples from the wheel, allowing free rotation without resisting torque.

Thanks to the drivetrain of the present invention, it is possible to exploit the characteristics of a toggle mechanism to transfer high torque to the wheel. By properly positioning the circular guide relative to the crank direction, it is also possible to optimize and uniform the torque transmitted to the wheel during the entire "power phase" of the pedaling cycle described above.

According to another aspect of the invention, at least one rod of the toggle mechanism, or optionally both, comprises two mutually sliding sections and releasable locking means to either lock or allow relative sliding between said two sections. The rods having said configuration allow the drivetrain to adapt to frames of different shapes and sizes.

In a preferred embodiment, the drivetrain comprises two supports arranged side-by-side and coaxial with each other, both integral with the central axle.

Each support is associated with a respective toggle mechanism and a respective gear connected to the wheel.

Typically, each support is connected to a respective pedal crank, which, like in all traditional drivetrains, are offset by 180° from each other.

As a result, the pivots of the respective toggle mechanisms are arranged in the respective circular guides such that the rods of said mechanisms operate out of phase relative to each other.

The drivetrain as conceived allows the aforementioned drawbacks of the prior art to be overcome. Indeed, thanks to the use of a toggle mechanism, it is possible to multiply the force applied by the cyclist on the pedal crank and thus the torque transferred to the wheel during the active phases of the pedaling cycle where the muscular force is weaker. This variation in torque relative to the applied force enables more uniform torque transmission to the wheel over the full pedal stroke.

Other features and advantages will become clearer from the indicative, and therefore non-limiting, description of a preferred but non-exclusive embodiment of the invention, as illustrated in the accompanying drawings in which:

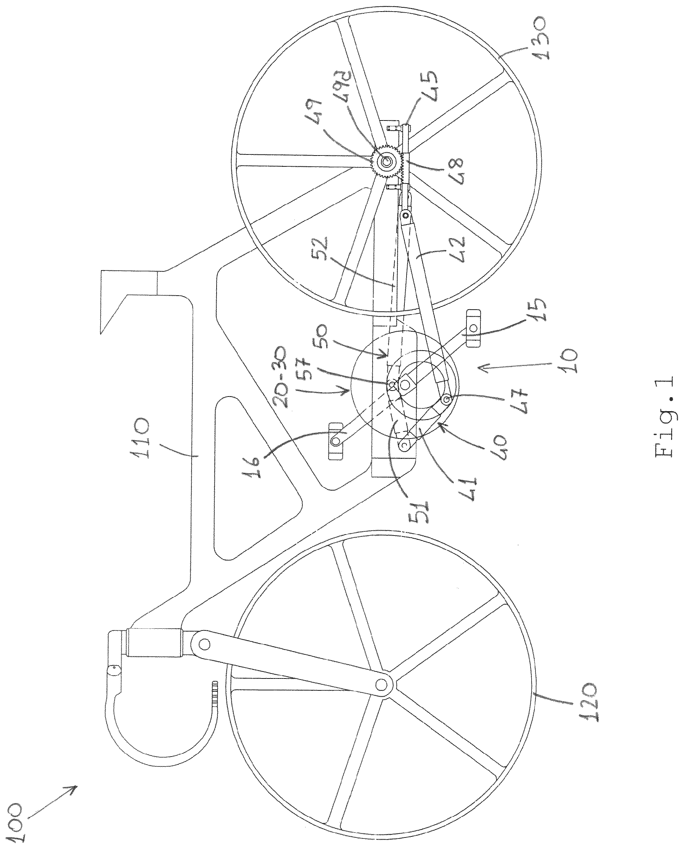

- Figure 1 is a side view of a bicycle equipped with the drivetrain according to the invention;

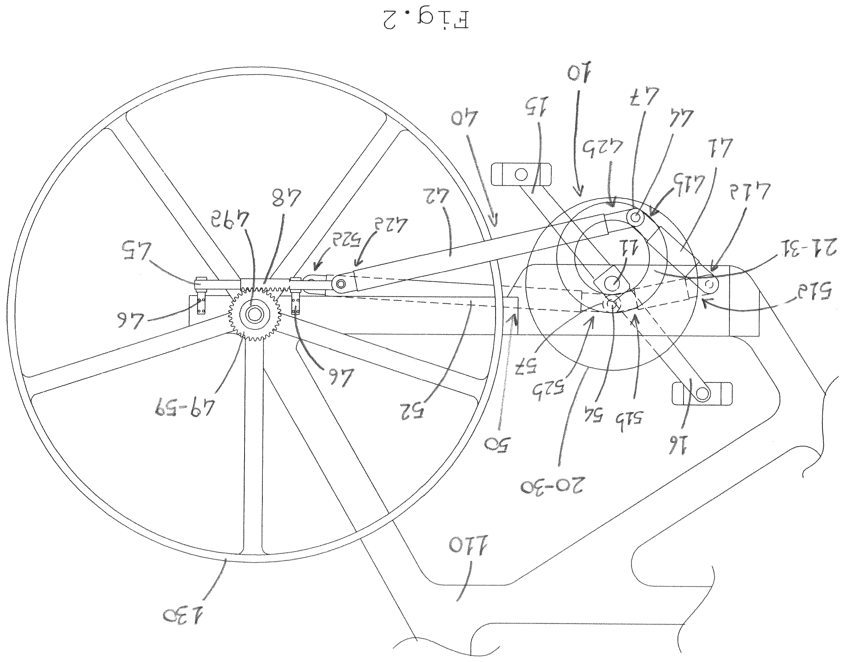

- Figure 2 is a side view of a detail of the bicycle of Figure 1 showing the drivetrain;

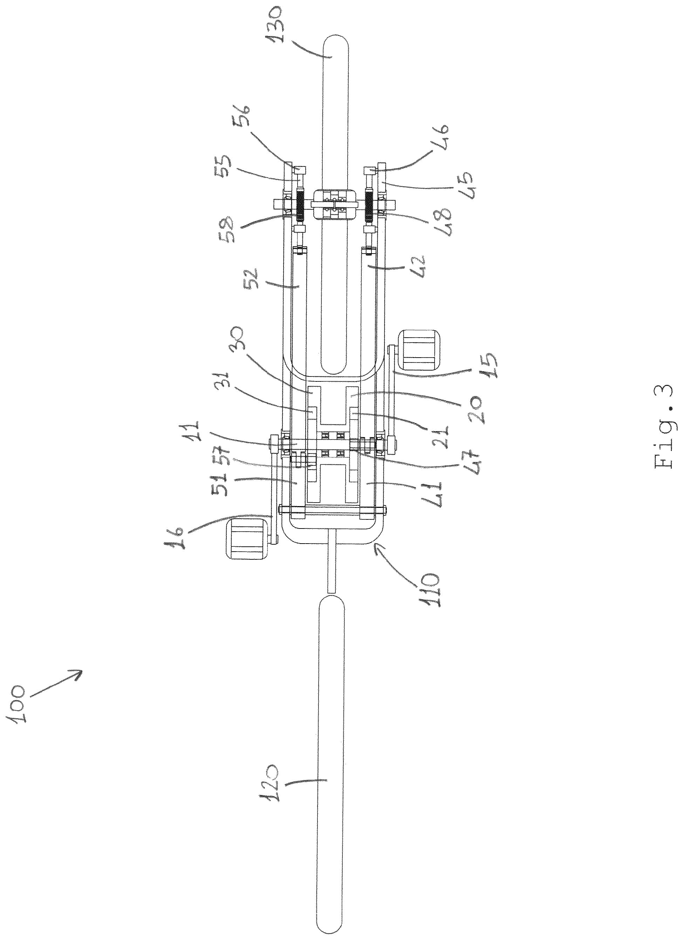

- Figure 3 is a top view of the bicycle of Figure 1;
- Figures 4a to 4d show a detail of the drivetrain according to the invention, with the pedal cranks in different angular positions.

With reference to the drawings, the numeral 100 indicates a bicycle comprising a frame 110, a front wheel 120, and a rear wheel 130.

The rear wheel 130 is connected to a drivetrain generally indicated by 10. The drivetrain 10 transmits to the rear wheel 130 the power supplied by the cyclist's legs to a pair of pedal cranks 15, 16.

The drivetrain 10 comprises a pair of supports 20, 30 connected to a central axle 11, which is rotatably mounted on the frame 110.

Each support 20, 30 is typically positioned at the respective ends of the central axle 11. At least the central axle 11 or the supports 20, 30 are integrally connected to the pedal cranks 15, 16.

Each support 20, 30 includes a circular guide 21, 31, the geometric centre of which is eccentric with respect to the central axle 11.

According to the invention, the support 20, 30 and its respective circular guide 21, 31 may take any shape that allows said circular guide 21, 31 to rotate in a vertical plane about the geometric axis of the central axle 11.

In an embodiment shown in the drawings, the circular guide 21, 31 may comprise a groove formed in the body of the support 20, 30, when the latter support 20, 30 includes a flattened discoidal element. The support 20, 30 may be made of metal, typically a lightweight alloy, or preferably of polymeric or composite material.

The drivetrain further includes a pair of toggle mechanisms 40, 50 that connect each support 20, 30 to the rear wheel 130 of the bicycle 100.

Each toggle mechanism 40, 50 includes a pair of rods: a first rod 41, 51, whose first end 41a, 51a is hinged to the frame 110 of the bicycle, and a second rod 42, 52, whose first end 42a, 52a is connected to a slide 45, 55.

The first rod 41, 51 and the second rod 42, 52 each have a second end, indicated as 41b, 51b and 42b, 52b respectively, said second ends are connected to each other via a hinge 44, 54.

The second end 41b, 51b of the first rod 41, 51 and the second end 42b, 52b of the second rod 42, 52 are connected by a hinge 44, 54.

The slide 45, 55 is slidably mounted on the frame 110 by means of guides 46, 56, along a straight direction.

A pivot 47, 57 is connected to the hinge 44, 54 which connects the first rod 41, 51 to the second rod 42, 52.

Said pivot 47, 57 is housed in the circular guide 21, 31 of the support 20, 30, allowing it to move freely along the guide.

As described above, the rotation of the support 20, 30 causes spatial displacement of the pivot 47, 57, which thanks to the kinematics of the toggle mechanism 40, 50 generates the reciprocating linear motion of the first end 42a, 52a of the second rod 42, 52.

A rack 48, 58 is mounted on the slide 45, 55 and meshes with a gear wheel 49, 59.

The gear wheel 49, 59 is in turn connected to the axle of the rear wheel 130 via a freewheel 49a, 59a.

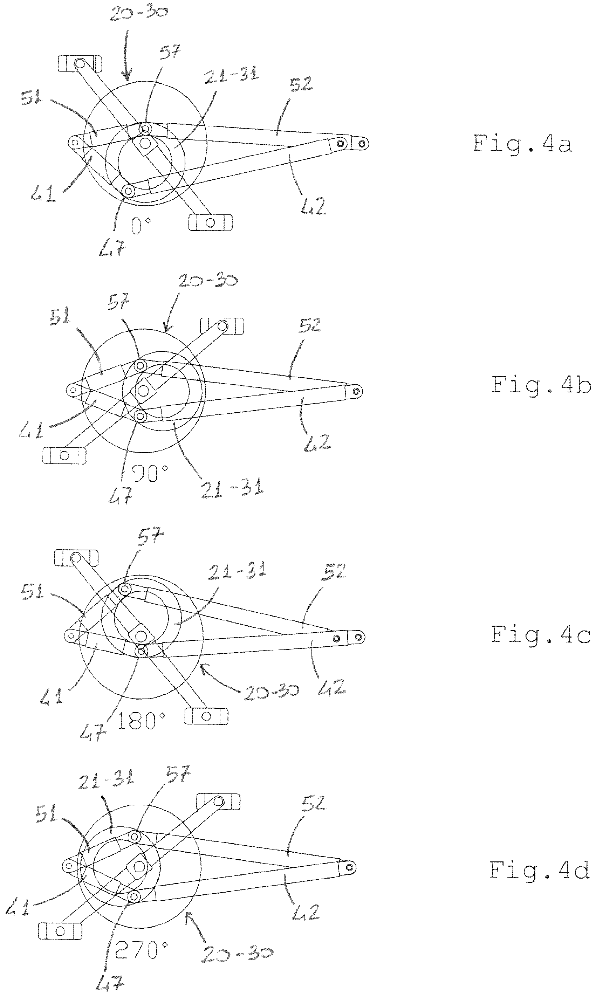

As seen in Figures 4a-4d, the circular guides 21, 31 of the two supports 20, 30 have the same angular orientation and eccentricity relative to the central axle 11.

However, the pivots 47, 57 are arranged in said circular guides 21, 31 such that the rods of the two toggle mechanisms 40, 50 work in counter-phase.

Thus, when toggle mechanism 40 is in the active phase during which gear wheel 49 provides driving torque to wheel 130 via freewheel 49a the other toggle mechanism 50 is in its return phase, with the freewheel 59a disengaged, allowing the slide to return for a new active phase.

It is noted that the shape of the bicycle frame 110 shown in the drawings is purely illustrative, as the frame may be implemented in various shapes compatible with the application of the drivetrain of the present invention.

Furthermore, the present invention, as described and illustrated, is susceptible to numerous modifications and variants, all falling within the scope of the inventive concept.

## Claims

1. A drivetrain (10) for a vehicle (100), in particular a bicycle, comprising at least a drive wheel (130), said drivetrain (10) comprising:
- a central axle (11) that can be assembled in a rotatable manner on a frame (110) of the vehicle (100);
- at least one support (20, 30), rotating integrally with said central axle (11);
- a pair of pedal cranks (15, 16), connected to said central axle (11) or to said support (20, 30) or to both, and rotating integrally therewith;
- a toggle mechanism (40, 50) that connects the support (20, 30) to the wheel (130) of the vehicle (100);
wherein the support (20, 30) comprises a circular guide (21, 31), the geometric centre of which is arranged eccentric with respect to the rotation axis of the central axle (11),
wherein the toggle mechanism (40, 50) comprises:
- a first rod (41, 51) with a first end (41a, 51a) and a second end (41b, 51b), the first end (41a, 51a) being hinged on the frame (110) of the vehicle;
- a second rod (42, 52) with a first end (42a, 52a) and a second end (42b, 52b), the first end (42a, 52a) being connected to a slide (45, 55) which slides with respect to the frame (110) of the vehicle;
- a hinge (44, 54) which connects the second ends (41b, 51b, 42b, 52b) of the first rod (41, 51) and the second rod (42, 52);
- a pivot (47, 57) housed in the circular guide (21, 31) of the support (20, 30), said pivot being connected to the hinge (44, 54) that connects the first rod (41, 51) and the second rod (42, 52);
wherein a rotary movement imparted by the pedal cranks (15, 16) to the support (20, 30) is transformed into a reciprocating rectilinear motion of the first end of the second rod (42, 52) and of the slide (45, 55) connected thereto,
said drivetrain further comprising a gear (48, 58, 49, 59) which connects the slide (45, 55) to the wheel (130) of the vehicle to transform the reciprocating rectilinear motion of said slide into a rotary motion of the gear to provide, in an active phase, a torque to the wheel (130).

2. The drivetrain (10) according to claim 1, wherein said gear comprises a rack (48, 58), integral with the slide (45, 55), and a gear wheel (49, 59) meshed with said rack, said gear wheel (49, 59) being connected to an axle of the wheel (130) by means of a freewheel (49a, 59a).

3. The drivetrain (10) according to claim 1 or 2, wherein the support (20, 30) comprises a discoidal body and wherein said circular guide (21, 31) comprises a groove with circular profile, obtained in the body of the support (20, 30), the walls of which act as a guide for the pivot (47, 57).

4. The drivetrain (10) according to claim 3, wherein said pivot (47, 57) is equipped with rolling means adapted to cooperate with the walls of the circular guide (21, 31).

5. The drivetrain (10) according to any one of the preceding claims, wherein each rod (41, 51, 42, 52) comprises two reciprocally sliding sections and releasable locking means for locking or for allowing the sliding of said two sections.

6. The drivetrain (10) according to any one of the preceding claims, comprising two supports (20, 30) arranged side by side and coaxial to each other, each support (20, 30) being associated with a respective toggle mechanism (40, 50) and with a respective gear (48, 58, 49, 59) connected to the wheel (130), wherein the pivots (47, 57) of the respective toggle mechanisms (40, 50) are arranged in the respective circular guides (21, 31) so that the rods of said respective toggle mechanisms work in opposition to each other.
